# EUROPÄISCHE PATENTSCHRIFT

(11) **EP 2 996 893 B1**
(45) Veröffentlichungstag und Bekanntmachung des Hinweises auf die Patenterteilung: **09.08.2017**
(21) Anmeldenummer: 14720601.5
(22) Anmeldetag: 30.04.2014
(51) Int. Cl.: B60K 6/28, B60K 1/04, H01M 2/10

(54) **VORRICHTUNG ZUR HALTERUNG ZUMINDEST EINES ENERGIEMODULS FÜR EIN KRAFTFAHRZEUG SOWIE ENTSPRECHENDES MONTAGEVERFAHREN**
DEVICE FOR RETAINING AT LEAST ONE ENERGY MODULE FOR A MOTOR VEHICLE, AND CORRESPONDING INSTALLATION METHOD
DISPOSITIF DE FIXATION D'AU MOINS UN MODULE D'ÉNERGIE POUR UN VÉHICULE AUTOMOBILE ET PROCÉDÉ DE MONTAGE AFFÉRENT

(30) Priorität: 13.05.2013 DE 102013208682
(43) Veröffentlichungstag der Anmeldung: 23.03.2016
(73) Patentinhaber: Bayerische Motoren Werke Aktiengesellschaft, 80809 München (DE)
(72) Erfinder: HÖFLER, Thomas, 82194 Groebenzell (DE); LAASCH, Felix, 61203 Reichelsheim (DE); SPÄTH, Martin, 80796 München (DE); WAGNER, Daniel, 80337 München (DE); ZÜGNER, Stephan, 81379 München-Thalkirchen (DE)
(86) Internationale Anmeldenummer: PCT/EP2014/058776
(87) Internationale Veröffentlichungsnummer: WO 2014/183995

(56) Entgegenhaltungen:
- DE-A1-102012 108 816
- FR-A1- 2 957 888
- JP-A- 2007 331 669
- JP-A- 2008 174 181
- US-A1- 2008 050 645

## Beschreibung

Die Erfindung betrifft eine Vorrichtung zur Halterung zumindest eines Energiemoduls für ein Kraftfahrzeug, insbesondere zur Halterung zumindest eines Hochvoltenergiemoduls für ein Hybrid- oder Elektrofahrzeug.

Weiterhin betrifft die Erfindung ein Fahrzeug mit einer solchen Vorrichtung.

Ferner bezieht sich die Erfindung auf ein Verfahren zur Montage einer solchen Vorrichtung.

Derartige Vorrichtungen zur Halterung von einem oder mehreren Energiemodulen, wie beispielsweise Energiespeichermodule oder Energiewandlermodule, sind im fertig im Kraftfahrzeug montierten Zustand weitläufig als Energiespeicher bzw. Energiespeichervorrichtungen bekannt.

In der Regel werden derartige Vorrichtungen unter anderem zur Halterung von Energiemodulen im Zusammenhang mit beispielsweise Hybrid- oder Elektrofahrzeugen eingesetzt. Zu diesem Zweck umfassen herkömmliche Vorrichtungen üblicherweise über Anbringungsabschnitte fahrzeugaufbauseitig bzw. fahrzeugkarosserieseitig anbringbare Elemente bzw. Bauteile zur Halterung der jeweiligen Energiemodule.

Die gehalterten Energiemodule werden meist durch miteinander gekoppelte Energiezellen ausgebildet. Beispiele für als Energiespeichermodule ausgebildete Energiemodule können Anordnungen aus mehreren Batteriezellen sein; zum Beispiel elektrische Batterien aus elektrochemischen Speicherzellen wie etwa Lithium-Ionen-Speicherzellen, Doppelschichtkondensatoren etc. Ein Beispiel für ein als Energiewandlermodul ausgebildetes Energiemodul ist ein Brennstoffzellenstapel, welcher eine Reihe von miteinander gekoppelten Brennstoffzellen aufweist.

Herkömmliche Vorrichtungen der vorgenannten Art verwenden beispielsweise strukturfeste, fahrzeugfahrzeugaufbauseitig befestigte Gehäuse, die sowohl zur Aufnahme als auch zur Halterung solcher Energiemodule vorgesehen sind. Dementsprechend nehmen diese Gehäuse zum einen sämtliche auf die Energiemodule oder unmittelbar auf die Gehäuse wirkenden Kräfte (beispielsweise bei einem Unfall bzw. Zusammenstoß, bei auftretenden Schwingungen, etc.) auf und schützen zum anderen die Energiemodule gegen äußere Umgebungseinflüsse; insbesondere durch Vorsehen entsprechender Dichtungen zwischen jeweiligen Gehäuseteilen zur Ausbildung (wasser-)dichter Gehäuse, etc.

Bei solchen herkömmlichen Vorrichtungen erfolgt eine Kraftleitung zwischen den entsprechenden Anbringungsabschnitten und den gehalterten Energiemodulen im Gehäuse jedoch nicht auf kürzest möglichem Weg, sondern weitgehend über die nahezu gesamte Gehäusestruktur, was sich aufgrund entsprechend vorzunehmender Gehäusedimensionierung nachteilig auf das Gehäusegewicht auswirkt. Die Masse des Gehäuses stellt neben der Masse des einen oder der mehreren Energiemodule aber gerade den größten Anteil des Gesamtgewichts der Vorrichtung dar.

Dies hat zur Folge, dass das hohe Gewicht der Vorrichtung die Leistungsfähigkeit des Kraftfahrzeugs verringert und den Energiebedarf des Kraftfahrzeugs erhöht.

Ferner sind bei solchen Vorrichtungen die Montage, die Verkabelung und die Verrohrung der Energiemodule aufgrund begrenzter Zugangsmöglichkeiten innerhalb der Gehäuse äußerst aufwändig. Dies führt zu erhöhten Montagezeiten, da die entsprechenden Montagearbeiten mit einem erhöhten Aufwand verbunden sind, woraus sich insgesamt erhöhte Montagekosten ergeben.

Ein aus dem Stand der Technik bekanntes weiteres Beispiel einer derartigen Vorrichtung zur Halterung von Energiemodulen ist in dem Dokument DE 10 2011 000 693 A1 beschrieben, wobei dieses Beispiel teilweise den vorgenannten Problemen Rechnung trägt.

Diese dem Stand der Technik angehörende Vorrichtung ist zur Halterung von in Hybridfahrzeugen oder Elektrofahrzeugen vorgesehenen elektrischen Energiemodulen (Hochvoltenergiemodulen) eingerichtet, welche im motorischen Betrieb einer elektrischen Maschine des Hybridfahrzeugs oder Elektrofahrzeugs entladen und im entsprechenden generatorischen Betrieb aufgeladen werden können.

Die aus dem Dokument DE 10 2011 000 693 A1 bekannte Vorrichtung umfasst weiterhin neben einem Halteelement zur Halterung der entsprechenden Energiemodule ein Gehäuse, in dem die jeweiligen elektrischen Energiemodule aufgenommen werden können. Zur Halterung der jeweiligen Energiemodule ist ausschließlich das Halteelement in Form eines Tragrahmens vorgesehen, wobei das Gehäuse, bestehend aus Gehäuseoberteil und Gehäuseunterteil, zumindest die von dem Tragrahmen gehalterten Energiemodule umgibt. Insbesondere der Tragrahmen ist dabei über Anbringungsabschnitte mit einem Fahrzeugaufbau eines Kraftfahrzeugs verbunden. Der Tragrahmen bildet unter anderem einen Gehäuseabschnitt aus und ist insbesondere dazu vorgesehen, sämtliche Kräfte und Momente, die auf die elektrischen.Energiemodule einwirken, aufzunehmen.

Zwar ist es anhand dieser dem Stand der Technik angehörenden Vorrichtung möglich, das Gewicht der Vorrichtung zu verringern, da lediglich der Tragrahmen zur überwiegenden Aufnahme der von den Energiemodulen resultierenden Kräfte und Momente zu dimensionieren ist und die Gehäuseteile für entsprechend geringere Belastungen ausgelegt werden können.

Allerdings sieht die Vorrichtung des Dokuments DE 10 2011 000 693 A1 keinerlei spezielle Einrichtungen oder Maßnahmen vor, die bei einem Unfall des Kraftfahrzeugs den gehalterten kostspieligen Energiemodulen Schutz vor Beschädigungen bieten. Das Dokument JP2007331669 A schlägt eine Vorrichtung vor, die die Merkmale des Oberbegriffs des unabhängigen Anspruchs 1 beinhaltet. Aus der DE 10 2012 108 816 A1 ist eine weitere Vorrichtung zur Halterung von Energiemodulen bekannt. Bei dem dort vorgestellten Ansatz ist vorgesehen, dass links und rechts eines Bodentunnels, in dem die Kardanwelle und das Auspuffrohr untergebracht sind, jeweils unterhalb der
Fahrzeugbodenplatte ein Batteriepaket angeordnet ist. Jedes der beiden Batteriepakete ist jeweils über Flansche an einem inneren Träger und einem äußeren Träger aufgehängt. Der innere Träger hat dabei die Funktion eines verformbaren Trägers, der bei einem Seitenaufprall verformt wird. Zu diesem Zweck weist der innere Träger ein Verbindungselement auf, das sich bei dem Seitenaufprall rotationsmäßig bewegt, wodurch erreicht wird, dass sich das innenseitige Ende des Batteriepakets bei einer Bewegung in Richtung nach innen gleichzeitig auch nach unten bewegt. Bei dieser Vorrichtung sind zwar Maßnahmen vorgesehen, den Energiemodulen Schutz vor Beschädigungen zu bieten, allerdings besteht hinsichtlich der Integration dieser Maßnahmen in ein Gehäuse, das die Batteriezellen umgibt, die das Batteriepaket ausbildend, noch Optimierungsbedarf.

Der Erfindung liegt daher die Aufgabe zugrunde, die gattungsgemäßen Vorrichtungen derart weiterzubilden, dass den gehalterten Energiemodulen ein im Vergleich zum Stand der Technik erhöhter Schutz vor Beschädigungen geboten werden kann. Weiterhin soll eine Verringerung der Montagekosten solcher Vorrichtungen im Vergleich zum Stand der Technik erzielt werden.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Es wird eine Vorrichtung zur Halterung zumindest eines Energiemoduls für ein Kraftfahrzeug, insbesondere zur Halterung zumindest eines Hochvoltenergiemoduls für ein Hybrid- oder Elektrofahrzeug vorgeschlagen, die zumindest ein über einen oder mehrere Anbringungsabschnitte fahrzeugaufbauseitig anbringbares Halteelement zur Halterung des zumindest einen Energiemoduls aufweist, wobei das Halteelement zumindest einen Halteabschnitt zur Halterung des zumindest einen Energiemoduls und zumindest einen Verformungsabschnitt aufweist, der derart ausgelegt ist, dass der Verformungsabschnitt bei Aufbringung einer vorbestimmten Kraft auf das Halteelement unter Verformung,
vorzugsweise plastischer Verformung, eine vorgegebene von der Verformung resultierende Relativbewegung zwischen dem das zumindest eine Energiemodul halternden Halteabschnitt und dem einen oder den mehreren Anbringungsabschnitten des Halteelements zulässt. Erfindungsgemäß ist vorgesehen, dass die Vorrichtung weiterhin ein Gehäuseelement aufweist, das derart ausgebildet ist, dass das Gehäuseelement den zumindest einen Halteabschnitt des Halteelements, vorzugsweise den Halteabschnitt und den Verformungsabschnitt des Halteelements, umgibt und zumindest mit dem Halteelement bei dem einen oder den mehreren Anbringungsabschnitten verbunden ist.

Dadurch können beispielsweise die bei einem Crash bzw. Unfall (zum Beispiel bei einem Front-, Heck- oder Seitencrash) auftretenden Betriebs- und Crashlasten bzw. -beanspruchungen gezielt von dem Halteelement aufgenommen werden, welches vorzugsweise als eine Art "tragende Skelettstruktur" ausgebildet ist, während die Funktion der Abdichtung des zumindest einen Energiemoduls bzw. der Abschirmung des zumindest einen Energiemoduls vor äußeren Umgebungseinflüssen durch ein Gehäuse der Vorrichtung in Form einer Kunststoffummantelung bewerkstelligt werden kann. Zu diesem Zweck ist das Halteelement bevorzugt kraftflussoptimiert als Trag- bzw. Haltestruktur ausgebildet, welche größtenteils innerhalb des Gehäuses der Vorrichtung angeordnet ist und das zumindest eine Energiemodul innerhalb des Gehäuses entsprechend haltert bzw. trägt.

Vorzugsweise umgibt das Gehäuseelement vollständig das Halteelement, so dass das Halteelement von äußeren Umgebungseinflüssen weitgehend abgeschirmt ist. Alternativ kann sich das Halteelement über das Gehäuse hinaus zu einem oder mehreren entsprechenden fahrzeugaufbauseitigen Anbindungspunkten erstrecken.

Die erfindungsgemäße Vorrichtung kann in vorteilhafter Weise derart weitergebildet werde, dass das Halteelement zumindest zwei Halteabschnitte zur jeweiligen Halterung zumindest eines Energiemoduls und zumindest einen dazwischen angeordneten Verformungsabschnitt aufweist, der derart ausgebildet ist, dass der Verformungsabschnitt bei Aufbringung
einer vorbestimmten Kraft auf das Halteelement eine vorgegebene von der Verformung resultierende Bewegung des Halteabschnitts in Richtung des Verformungsabschnitts zulässt. Bevorzugt erfolgt diese Kraftaufbringung auf das Halteelement in einer Längsrichtung des Halteelements, so dass das jeweilige Energiemodul auf der Tragstruktur bzw. dem Halteabschnitt bei einem Crash in Crashrichtung in Bezug auf die Anbringungsabschnitte verschoben werden.

Weiterhin kann die erfindungsgemäße Vorrichtung derart umgesetzt werden, dass das Halteelement so ausgebildet ist, dass dessen über den Verformungsabschnitt beabstandete Halteabschnitte in einer Längsrichtung des Halteelements auf einer Achse oder nahezu auf einer Achse liegen und/oder der Verformungsabschnitt zumindest abschnittsweise derart geformt ist, dass der Verformungsabschnitt zumindest abschnittsweise einen Fahrzeugmitteltunnel umgeben kann. Insbesondere kann der Verformungsabschnitt eckig und/oder rund bzw. gekrümmt ausgebildet sein.

Ferner kann die erfindungsgemäße Vorrichtung so verwirklicht werden, dass das Halteelement so ausgebildet ist, dass der zumindest eine Halteabschnitt das zumindest eine Energiemodul derart haltert, dass sich der Halteabschnitt durch den Massenschwerpunkt des Energiemoduls erstreckt. Das aus mehreren Energiezellen zusammengesetzte Energiemodul bildet einen Massenschwerpunkt aus, durch welche der Halteabschnitt im Wesentlichen verläuft, so dass sich eine verbesserte Kraftleitung in der Vorrichtung ergibt. Im Falle von mehreren gehalterten Energiemodulen erstreckt sich der Halteabschnitt vorzugsweise durch den durch die Gesamtheit der Energiemodule festgelegten Massenschwerpunkt. Da der Kraftpfad somit durch den Schwerpunkt des gehalterten Energiemoduls bzw. der gehalterten Energiemodule verläuft, kann ein "Aufschaukeln des Systems" bzw. ein Ansteigen von aufgrund von Schwingungen herrührenden Belastungen weitgehend verhindert werden, so dass die entsprechenden Anbringungsabschnitte der Vorrichtung nicht übermäßig belastet werden. Weiterhin kann eine Reduktion der Masse des Halteelements bzw. der Tragstruktur erzielt werden, wenn das gehalterte Energiemodul bzw. die gehalterten Energiemodule in dem Kraftpfad des Halteelements liegen. Insbesondere kann die Energiemodulsteifigkeit des Energiemoduls bzw. der Energiemodule zur Erhöhung der Steifigkeit des Halteelements genutzt werden.

Darüber hinaus kann die erfindungsgemäße Vorrichtung derart umgesetzt werden, dass das Halteelement eingerichtet ist, über den einen oder die mehreren Anbringungsabschnitte in Fahrzeugquer- oder Fahrzeuglängsrichtung fahrzeugaufbauseitig befestigt zu werden, und/oder derart ausgebildet ist, dass der Verformungsabschnitt bei Aufbringung einer vorbestimmten Kraft auf das Halteelement in Fahrzeugquer- oder Fahrzeuglängsrichtung eine von der Verformung resultierende Relativbewegung des das zumindest eine Energiemodul halternden Halteabschnitts in Bezug auf den einen oder die mehreren Anbringungsabschnitte des Halteelements in Fahrzeugquer- oder Fahrzeuglängsrichtung zulässt.

Des Weiteren kann die erfindungsgemäße Vorrichtung derart ausgebildet sein, dass der Verformungsabschnitt eingerichtet ist, bei Aufbringung einer vorbestimmten Kraft auf das Halteelement unter plastischer und/oder elastischer Verformung als Energieabsorptionselement zu wirken oder bei Aufbringung einer Kraft auf das Halteelement unter plastischer und/oder elastischer Verformung die vorgegebene Bewegung des Halteabschnitts in Richtung eines fahrzeugaufbauseitigen Energieabsorptionselements zu bewirken. Beispielsweise kann ein Mitteltunnel des Fahrzeugs sowie dahinter liegende Komponenten, beispielsweise speziell hierfür vorgesehene Energieabsorptionselemente, die
Gelenkwelle des Fahrzeugs, Rohrleitungen, beispielsweise von der Abgasanlage des Fahrzeugs, etc. als fahrzeugaufbauseitiges Energieabsorptionselement dienen.

Weiterhin kann die erfindungsgemäße Vorrichtung so realisiert werden, dass der Verformungswiderstand des Halteabschnitts und der Verformungswiderstand des Verformungsabschnitts so gewählt sind, dass sich der Verformungsabschnitt bei Aufbringung einer vorbestimmten Kraft innerhalb eines vorgegeben Kräftebereichs verformt, während der als Folge von der Verformung des Verformungsabschnitts bewegte Halteabschnitt keine oder nahezu keine plastische Verformung erfährt.

Vorzugsweise wird die erfindungsgemäße Vorrichtung so ausgestaltet, dass das Energiemodul ein oder mehrere miteinander gekoppelte Energiezellen aufweist. Beispielsweise umfasst jedes Energiemodul ein oder mehrere miteinander gekoppelte, vorzugsweise elektrisch gekoppelte, Energiezellen, welche insbesondere durch herkömmliche elektrische Batterien wie zum Beispiel elektrochemische Speicherzellen wie etwa Lithium-Ionen-Speicherzellen, Doppelschichtkondensatoren etc., Brennstoffzellen, etc. gebildet werden können.

Darüber hinaus kann die erfindungsgemäße Vorrichtung derart weitergebildet werden, dass das Halteelement das zumindest eine Energiemodul derart haltert, dass bei Aufbringung einer Kraft auf die Vorrichtung ein Kraftanteil der aufgebrachten Kraft von dem Halteelement und ein weiterer Kraftanteil der aufgebrachten Kraft von dem Energiemodul übertragen wird. Dementsprechend nimmt das zumindest eine Energiemodul einen entsprechenden Kraftanteil auf, so dass das Halteelement für geringere Belastungen ausgelegt werden kann. Weiterhin kann auf diese Weise die Gesamtsteifigkeit der Vorrichtung über die zusätzliche Kraftübertragung durch das zumindest eine Energiemodul erhöht werden.

Ferner kann die erfindungsgemäße Vorrichtung so verwirklicht werden, dass ein Energieabsorptionselement an einer Gehäuseaußenseite der Vorrichtung im Bereich des Anbringungsabschnitts angeordnet ist. Beispielsweise kann das Energieabsorptionselement an einer Außenseite des Gehäuseelements oberhalb eines Halters eines Anbringungsabschnitts angeordnet sein, so dass es zwischen dem Gehäuseelement und dem Fahrzeugaufbau vorgesehen.

Das erfindungsgemäße Fahrzeug, insbesondere Kraftfahrzeug, vorzugsweise Hybrid- oder Elektrofahrzeug, umfasst die vorstehend beschriebene erfindungsgemäße Vorrichtung.

Das erfindungsgemäße Verfahren betrifft die Montage der erfindungsgemäßen Vorrichtung zur Halterung zumindest eines Energiemoduls für ein Kraftfahrzeug, und umfasst die folgenden Schritte:
- Befestigen von zumindest einem Energiemodul an einem Halteelement der Vorrichtung;
- zumindest teilweises Instandsetzen des zumindest einen Energiemoduls;
- Anordnen des Halteelements zusammen mit dem zumindest einen zumindest teilweise instandgesetzten Energiemodul in einem Gehäuse der Vorrichtung.

In besonders vorteilhafter Weise kann das Halteelement bzw. die Tragstruktur somit als Vormontageträger dienen. So wird der Großteil der beispielsweise Hochvoltenergiemodule ausbildenden Energiemodule an der Tragstruktur befestigt, verkabelt und verrohrt, bevor das Halteelement bzw. die Tragstruktur in das Gehäuseelement, welche als Systemhülle ausgeführt sein kann, eingehoben wird. Somit werden die Montagezugänglichkeiten verbessert und die Montagezeiten reduziert. Ferner wird eine wesentliche Vereinfachung der Energiemodulmontage und damit einhergehend eine Reduktion der Montagezeiten erzielt. Darüber hinaus können Bauräume im Fahrzeug flexibler genutzt werden.

Weiterhin ergeben sich für das erfindungsgemäße Verfahren die im Zusammenhang mit der erfindungsgemäßen Vorrichtung erläuterten Eigenschaften und Vorteile auf gleiche oder ähnliche Weise, weshalb zur Vermeidung von Wiederholungen auf die entsprechenden Ausführungen im Zusammenhang mit der erfindungsgemäßen Vorrichtung verwiesen wird. Wie vorstehend bereits erläutert ist, wird anhand der Montage des zumindest einen Energiemoduls auf dem Halteelement bzw. der Tragstruktur letzteres bei einem Fahrzeugseiten-, Fahrzeugfront- oder Fahrzeugheckcrash in Crashrichtung zusammen mit dem Halteabschnitt verschoben, wodurch die Sicherheit des Gesamtsystems erhöht wird.

Eine bevorzugte Ausführungsform der Erfindung wird nachfolgend anhand der Figuren beispielhaft erläutert.

Es zeigen:
- Figur 1: eine Darstellung einer erfindungsgemäßen Vorrichtung zur Halterung von Energiemodulen für ein Kraftfahrzeug in einer Frontansicht;
- Figur 2: eine weitere Darstellung der erfindungsgemäßen Vorrichtung von Fig. 1, bei der das in Fig. 1 gezeigte Gehäuse der Vorrichtung nicht dargestellt ist;
- Figur 3: eine Darstellung der erfindungsgemäßen Vorrichtung von Fig. 1 in einer Draufsicht;
- Figur 4: eine perspektivische Darstellung der erfindungsgemäßen Vorrichtung von Fig. 1; und

- Figur 5: eine vergrößerte Darstellung eines Anbringungsabschnitts der erfindungsgemäßen Vorrichtung von Fig. 1.

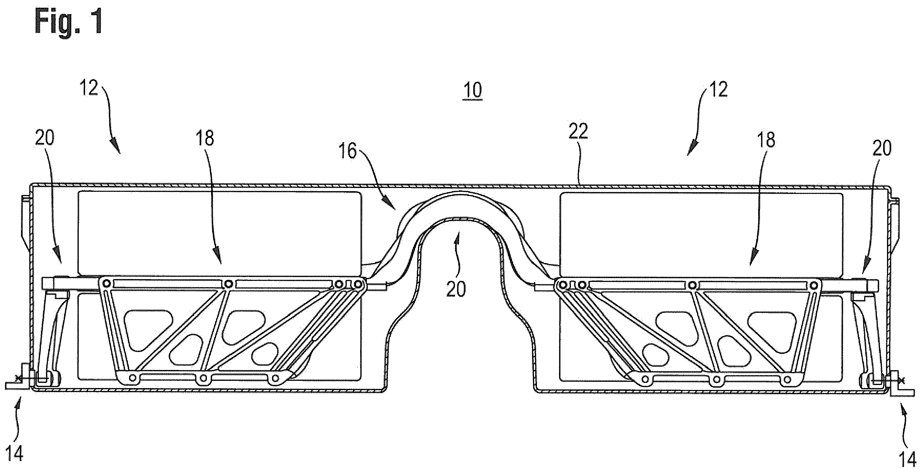

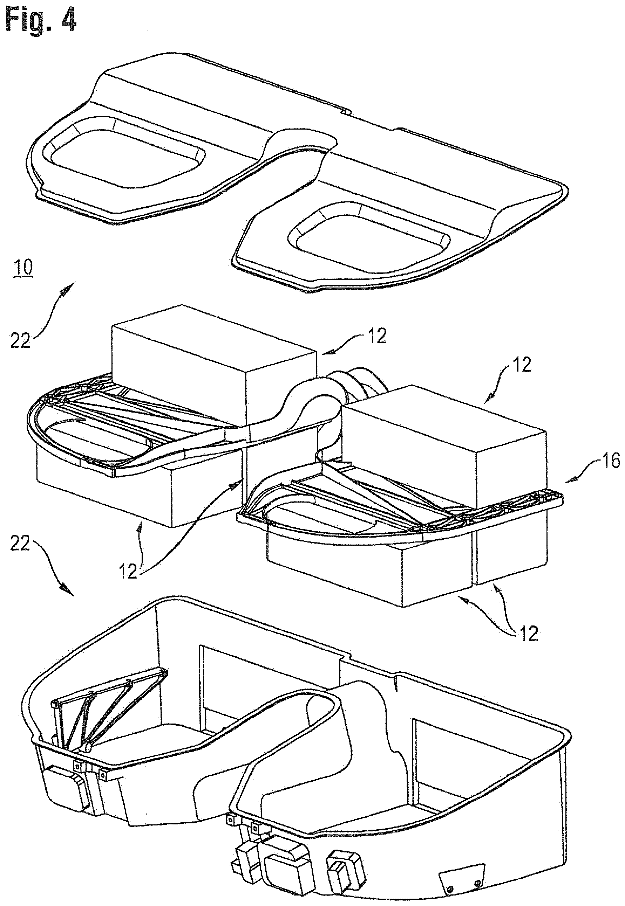

Fig. 1 zeigt eine Darstellung einer erfindungsgemäßen Vorrichtung 10 zur Halterung von in diesem Fall sechs Energiemodulen 12, beispielsweise Energiespeichermodulen und/oder Energiewandlermodulen, für ein Kraftfahrzeug in einer Frontansicht. Die Anzahl der gehalterten Energiemodul 12 ist insbesondere Fig. 4 zu entnehmen, welche eine perspektivische Darstellung der erfindungsgemäßen Vorrichtung 10 von Fig. 1 zeigt. Jedoch kann die erfindungsgemäße Vorrichtung 10 zur Halterung einer beliebigen Anzahl von Energiemodulen 12 ausgestaltet sein, soweit dies die Bauraumverhältnisse im Kraftfahrzeug zulassen.

Im dargestellten Fall ist die Vorrichtung 10 zur Halterung von sechs Energiemodulen 12, die jeweils durch Hochvoltenergiemodule gebildet werden, für ein Hybrid- oder Elektrofahrzeug vorgesehen. Jedes Energiemodul 12 umfasst mehrere nicht einzeln dargestellte miteinander gekoppelte Energiezellen. Beispielsweise können die Energiemodule 12 durch eine Anordnung aus ein oder mehreren Batteriezellen wie zum Beispiel elektrochemische Speicherzellen wie etwa Lithium-Ionen-Speicherzellen, Doppelschichtkondensatoren, Brennstoffzellen, etc. gebildet werden.

Wie aus Fig. 1 ersichtlich ist, umfasst die erfindungsgemäße Vorrichtung 10 ein über in diesem Fall zwei Anbringungsabschnitte 14 fahrzeugaufbauseitig anbringbares Halteelement 16 zur Halterung der sechs Energiemodule 12.

Weiterhin weist die erfindungsgemäße Vorrichtung 10 ein in diesem Fall aus zwei Gehäuseteilen bestehendes Gehäuseelement 22 auf, das - wie in den Fig. 1 und 4 dargestellt ist - derart ausgebildet ist, dass das Gehäuseelement 22 das Halteelement 16 im verbauten Zustand gänzlich umgibt bzw. aufnimmt. Insbesondere nimmt das Gehäuseelement 22 nachstehend näher erläuterte Halteabschnitte 18 des Halteelements 16 und nachstehend näher erläuterte Verformungsabschnitte 20 des Halteelements 16 auf.

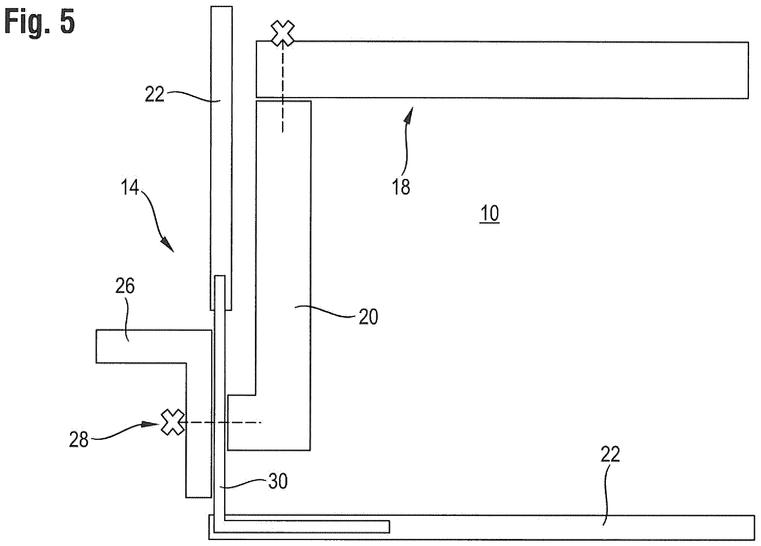

Wie insbesondere in Fig. 1 erkennbar ist, ist das Gehäuseelement 22 mit dem Halteelement 16 bei den Anbringungsabschnitten 14 verbunden, welche im Zusammenhang mit Fig. 5 nachstehend näher erläutert werden.

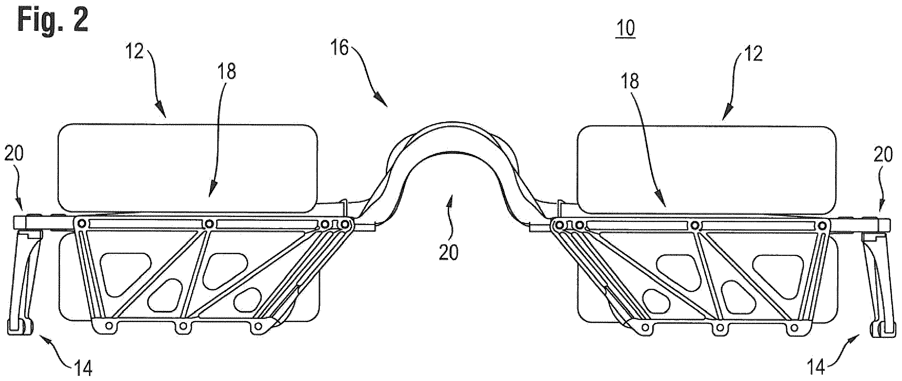

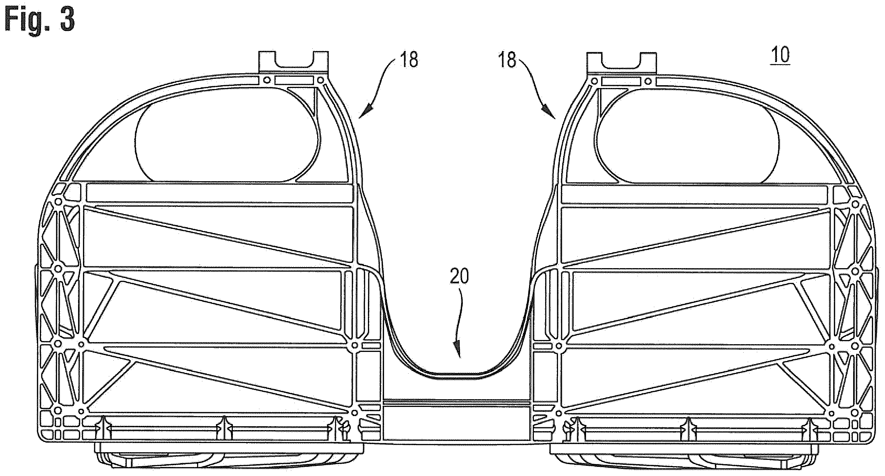

Fig. 2 zeigt eine weitere Darstellung der erfindungsgemäßen Vorrichtung 10 von Fig. 1, in der das Gehäuse bzw. das Gehäuseelement 22 weggelassen ist, wobei Fig. 3 eine weitere Darstellung der erfindungsgemäßen Vorrichtung 10 von Fig. 1 in einer Draufsicht zeigt.

Wie aus den Fig. 1 bis 4 ersichtlich ist, umfasst das Halteelement 16 in diesem Fall zwei Halteabschnitte 18 zur Halterung der sechs Energiemodule 12 und drei Verformungsabschnitte 20. Insbesondere ist das Halteelement 16 derart ausgebildet, dass es zwei Halteabschnitte 18 zur jeweiligen Halterung von jeweils drei Energiemodulen 12 und einen dazwischen angeordneten mittleren bzw. ersten Verformungsabschnitt 20 aufweist. Ferner umfasst das Halteelement 16 zwei seitliche bzw. zweite Verformungsabschnitte 20, die jeweils zwischen dem entsprechenden Halteabschnitt 18 und dem entsprechenden Anbringungsabschnitt 14 angeordnet sind. Wie nachstehend noch näher erläutert wird, kann sich das Halteelement 16 alternativ aber auch über das Gehäuseelement 22 hinaus bis zu entsprechenden fahrzeugaufbauseitigen Anbringungsabschnitten bzw. Anbringungspunkten erstrecken, so dass die entsprechenden Anbringungsabschnitte vom Gehäuseelement 22 beabstandet sind.

Im dargestellten Fall ist das Halteelement 16 so ausgebildet, dass dessen über den mittleren Verformungsabschnitt 20 beabstandete Halteabschnitte 18 in einer Längsrichtung des Halteelements 16 auf einer Achse liegen oder nahezu auf einer Achse liegen, wie insbesondere in Fig. 1 oder 2 erkennbar ist, wobei der mittlere bzw. erste Verformungsabschnitt 20 zumindest abschnittsweise derart gekrümmt ist, dass der mittlere bzw. erste Verformungsabschnitt 20 zumindest abschnittsweise einen Fahrzeugmitteltunnel umgeben kann, wie insbesondere in den Fig. 1 und 4 ersichtlich ist. Insbesondere ist das Halteelement 16 in diesem Fall eingerichtet, über die Anbringungsabschnitte 14 in Fahrzeugquerrichtung (y-Achse des herkömmlichen Fahrzeugkoordinatensystems) fahrzeugaufbauseitig befestigt zu werden.

Wie weiterhin insbesondere den Fig. 1 und 4 entnommen werden kann, ist das Halteelement 16 ferner so ausgebildet, dass die Halteabschnitte 18 die jeweiligen Energiemodule 12 derart haltern, dass sich diese durch einen Massenschwerpunkt erstrecken, der durch jeweils drei Energiemodule 12 des jeweiligen Halteabschnitts 18 festgelegt wird.

In besonders vorteilhafter Weise sind die Verformungsabschnitte 20 des Halteelements 16 derart ausgelegt, dass die Verformungsabschnitte 20 bei Aufbringung einer vorbestimmten Kraft innerhalb eines vorbestimmten Kräftebereichs auf das Halteelement 16 unter Verformung, vorzugsweise plastischer Verformung, eine vorgegebene von der Verformung resultierende Relativbewegung zwischen den jeweiligen die Energiemodule 12 halternden Halteabschnitten 18 und den zwei Anbringungsabschnitten 14 des Halteelements 16 zulassen. Mit anderen Worten sind die Verformungsabschnitte 20 derart ausgebildet, dass sie bei Aufbringung der vorbestimmten Kraft unter Verformung, insbesondere plastischer Verformung, einen vorgegebenen Bewegungsablauf der jeweiligen Halteabschnitte 18 in Bezug auf die Anbringungsabschnitte bewirken.

Insbesondere ist das Halteelement 16 derart ausgebildet, dass der mittlere bzw. erste Verformungsabschnitt 20 bei Aufbringung einer vorbestimmten in Fahrzeugquerrichtung wirkenden Kraft auf das Halteelement 16 eine von der Verformung resultierende Bewegung der Halteabschnitte 18 in Richtung des mittleren bzw. ersten Verformungsabschnitts 20 zulässt. Wie insbesondere aus den Fig. 1 bis 4 ersichtlich ist, ist das Halteelement 16 derart ausgebildet, dass der mittlere bzw. erste Verformungsabschnitt 20 bei Aufbringung einer vorbestimmten in Fahrzeugquerrichtung wirkenden Kraft auf das Halteelement 16 eine von der Verformung resultierende Relativbewegung des die jeweiligen Energiemodule 12 halternden Halteabschnitts 18 in Bezug auf die Anbringungsabschnitte 14 des Halteelements 16 in Richtung Fahrzeugmitte zulässt; beispielsweise dann, wenn einen externe in Richtung Fahrzeugmitte gerichtete bzw. wirkende Kraft in Fahrzeugquerrichtung auf das Kraftfahrzeug einwirkt, welche bei einem Unfall, wie einem seitlichen Aufprall bzw. Seitencrash, auftreten kann. Ebenso denkbar ist aber auch die Verformung des mittleren bzw. ersten Verformungsabschnitts 20 aufgrund von auf die Energiemodule 12 wirkenden Trägheitskräften.

Zur Energieabsorption sind der mittlere bzw. erste Verformungsabschnitt 20 sowie die seitlichen bzw. zweiten Verformungsabschnitte 20 eingerichtet, bei Aufbringung einer vorbestimmten Kraft auf das Halteelement 16 unter plastischer Verformung als Energieabsorptionselemente zu wirken. Dabei können die jeweiligen Verformungsabschnitte 20 derart ausgelegt sein, dass sie den größten Teil der aus der Kraftaufbringung resultierenden Energie oder sämtliche aus der Kraftaufbringung resultierende Energie aufnehmen oder alternativ bei Aufbringung einer Kraft auf das Halteelement 16 unter plastischer und/oder elastischer Verformung die Bewegung des Halteabschnitts 18 in Richtung eines fahrzeugaufbauseitigen Energieabsorptionselements bewirken. In diesem Fall kann das fahrzeugaufbauseitige Energieabsorptionselement beispielsweise durch den Mitteltunnel des Fahrzeugs sowie dahinter liegender Bauteile bzw. Elemente ausgebildet werden.

In beiden Fällen sind der Verformungswiderstand der Halteabschnitte 18 und der Verformungswiderstand der mittleren und seitlichen Verformungsabschnitte 20 so gewählt, dass sich die Verformungsabschnitte 20 bei Aufbringung einer vorbestimmten Kraft innerhalb des vorgegeben Kräftebereichs verformen, während die als Folge von der Verformung der Verformungsabschnitte 20 bewegten Halteabschnitte 18 keine oder nahezu keine plastische Verformung erfahren.

Das nicht dargestellte erfindungsgemäße Fahrzeug umfasst die vorstehend ausführlich beschriebene erfindungsgemäße Vorrichtung 10 und ist in diesem bevorzugten Ausführungsbeispiel als das vorgenannte Hybrid- oder Elektrofahrzeug ausgebildet.

Die erfindungsgemäße Montage der Vorrichtung 10 gestaltet sich wie folgt:
Zunächst werden die sechs Energiemodule 12 an dem Halteelement 16, insbesondere den jeweiligen Halteabschnitten 18 des Halteelements 16, befestigt. Anschließend erfolgt ein zumindest teilweises Instandsetzen der an den jeweiligen Halteabschnitten 18 befestigten sechs Energiemodule 12, welches insbesondere eine Verkabelung und Verrohrung der jeweiligen Energiemodule 12 umfasst. Schließlich wird das Halteelement 16 zusammen mit den gehalterten sechs Energiemodulen 12 in das eine Gehäuseteil eingesetzt, welches dann mit dem anderen Gehäuseteil verschlossen wird.

Fig. 5 zeigt eine vergrößerte beispielhafte Darstellung eines Anbringungsabschnitts 14 der erfindungsgemäßen Vorrichtung von Fig. 1. Wie aus Fig. 5 ersichtlich ist, sind die seitlichen Verformungsabschnitte 20 weiterhin mit einen Anbringungsabschnitt 14 vorgesehen, wobei die seitlichen Verformungsabschnitte 20 an deren einem Ende mit dem jeweiligen Halteabschnitt 18 und mit deren anderem Ende über ein Gehäuseverbindungselement 30 zur Verbindung mit den oberen und unteren Gehäuseteilen des Gehäuseelements 22 mit einem fahrzeugaufbauseitigen Halter 26 verbunden sind, beispielsweise über eine Schraubverbindung 28.

Selbstverständlich sind Abwandlungen von dieser konkreten in Fig. 5 gezeigten Ausgestaltung des Anbringungsabschnitts 14 möglich, solange bei Aufbringung einer Kraft auf das Halteelement 18 ein vorwiegender Kraftfluss zwischen dem seitlichen Verformungselement 20 und dem Halter 26 unter Minimierung eines Kraftflusses zwischen dem Halter 26 und dem Gehäuseelement 22 erzielt wird.

Optional kann vorgesehen sein, dass sich auch der Anbringungsabschnitt 14 zumindest abschnittsweise zusammen mit dem seitlichen Verformungsabschnitt 20 verformt und damit zumindest abschnittsweise selbst einen Verformungsabschnitt ausbildet.

Weiterhin ist anzumerken, dass sich das Halteelement 16 über das Gehäuseelement 22 hinaus bis zu einem Anbringungsabschnitt, insbesondere einen fahrzeugaufbauseitigen Anbringungspunkt, erstrecken kann. In diesem Fall weist das Halteelement 16 einen seitlichen Verformungsabschnitt auf, der sich von dem Halteabschnitt 18 über das Gehäuseelement 22 bis hin zu dem fahrzeugaufbauseitigen Anbringungspunkt erstreckt.

Darüber hinaus können optional Energieabsorptionselemente zwischen der Vorrichtung 10 und beispielsweise dem Fahrzeugaufbau vorgesehen sein; beispielsweise können solche Energieabsorptionselemente durch den Halter 26 an der Außenseite des oberen Gehäuseteils des Gehäuseelements 22 angebracht sein.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Vorrichtung (10) zur Halterung zumindest eines Energiemoduls (12) für ein Kraftfahrzeug, insbesondere zur Halterung zumindest eines Hochvoltenergiemoduls für ein Hybrid- oder Elektrofahrzeug, wobei die Vorrichtung (10) ein über einen oder mehrere Anbringungsabschnitte (14) fahrzeugaufbauseitig anbringbares Halteelement (16) zur Halterung des zumindest einen Energiemoduls (12) aufweist, wobei das Halteelement (16) zumindest einen Halteabschnitt (18) zur Halterung des zumindest einen Energiemoduls (12) und zumindest einen Verformungsabschnitt (20) aufweist, der derart ausgelegt ist, dass der Verformungsabschnitt (20) bei Aufbringung einer vorbestimmten Kraft auf das Halteelement (16) unter Verformung eine vorgegebene von der Verformung resultierende Relativbewegung zwischen dem das zumindest eine Energiemodul (12) halternden Halteabschnitt (18) und dem einen oder den mehreren Anbringungsabschnitten (14) des Halteelements (16) zulässt,
**dadurch gekennzeichnet, dass**
die Vorrichtung (10) weiterhin ein Gehäuseelement (22) aufweist, das derart ausgebildet ist, dass das Gehäuseelement (22) den zumindest einen Halteabschnitt (18) des Halteelements (16), vorzugsweise den Halteabschnitt (18) und den Verformungsabschnitt (20) des Halteelements (16), umgibt und zumindest mit dem Halteelement (16) bei dem einen oder den mehreren Anbringungsabschnitten (14) verbunden ist.

2. Vorrichtung (10) gemäß Anspruch 1, wobei das Halteelement (16) zumindest zwei Halteabschnitte (18) zur jeweiligen Halterung zumindest eines Energiemoduls (12) und zumindest einen dazwischen angeordneten Verformungsabschnitt (20) aufweist, der derart ausgebildet ist, dass der Verformungsabschnitt (20) bei Aufbringung einer vorbestimmten Kraft auf das Halteelement (16) eine von der Verformung resultierende Bewegung des Halteabschnitts (18) in Richtung des Verformungsabschnitts (20) zulässt.

3. Vorrichtung (10) gemäß Anspruch 2, wobei das Halteelement (16) so ausgebildet ist, dass dessen über den Verformungsabschnitt (20) beabstandete Halteabschnitte (18) in einer Längsrichtung des Halteelements (16) auf einer Achse liegen und/oder der Verformungsabschnitt (20) zumindest abschnittsweise derart geformt ist, dass der Verformungsabschnitt (20) zumindest abschnittsweise einen Fahrzeugmitteltunnel umgeben kann.

4. Vorrichtung (10) gemäß einem der vorangehenden Ansprüche, wobei das Halteelement (16) so ausgebildet ist, dass der zumindest eine Halteabschnitt (18) das zumindest eine Energiemodul (12) derart haltert, dass sich der Halteabschnitt (18) durch den Massenschwerpunkt des zumindest einen Energiemoduls (12) erstreckt.

5. Vorrichtung (10) gemäß einem der vorangehenden Ansprüche, wobei das Halteelement (16) eingerichtet ist, über den einen oder die mehreren Anbringungsabschnitte (14) in Fahrzeugquer- oder Fahrzeuglängsrichtung fahrzeugaufbauseitig befestigt zu werden, und/oder derart ausgebildet ist, dass der Verformungsabschnitt (20) bei Aufbringung einer vorbestimmten Kraft auf das Halteelement (16) in Fahrzeugquer- oder Fahrzeuglängsrichtung eine von der Verformung resultierende Relativbewegung des das zumindest eine Energiemodul (12) halternden Halteabschnitts (18) in Bezug auf den einen oder die mehreren Anbringungsabschnitte (14) des Halteelements (16) in Fahrzeugquer- oder Fahrzeuglängsrichtung zulässt.

6. Vorrichtung (10) gemäß einem der vorangehenden Ansprüche, wobei der Verformungsabschnitt (20) eingerichtet ist, bei Aufbringung einer vorbestimmten Kraft auf das Halteelement (16) unter plastischer und/oder elastischer Verformung als Energieabsorptionselement zu wirken oder bei Aufbringung einer Kraft auf das Halteelement (16) unter plastischer und/oder elastischer Verformung die Bewegung des Halteabschnitts (18) in Richtung eines fahrzeugaufbauseitigen Energieabsorptionselements zu bewirken.

7. Vorrichtung (10) gemäß einem der vorangehenden Ansprüche, wobei der Verformungswiderstand des Halteabschnitts (18) und der Verformungswiderstand des Verformungsabschnitts (20) so gewählt sind, dass sich der Verformungsabschnitt (20) bei Aufbringung einer vorbestimmten Kraft innerhalb eines vorgegebenen Kräftebereichs verformt, während der als Folge von der Verformung des Verformungsabschnitts (20) bewegte Halteabschnitt (18) keine oder nahezu keine plastische Verformung erfährt.

8. Vorrichtung (10) gemäß einem der vorangehenden Ansprüche, wobei das zumindest eine Energiemodul (12) eine oder mehrere miteinander gekoppelte Energiezellen aufweist.

9. Vorrichtung (10) gemäß einem der vorangehenden Ansprüche, wobei das Halteelement (16) das zumindest eine Energiemodul (12) derart haltert, dass bei Aufbringung einer Kraft auf die Vorrichtung (10) ein Kraftanteil der aufgebrachten Kraft von dem Halteelement (12) und ein weiterer Kraftanteil der aufgebrachten Kraft von dem Energiemodul (12) übertragen wird.

10. Vorrichtung (10) gemäß einem der vorangehenden Ansprüche, wobei ein Energieabsorptionselement an einer Gehäuseaußenseite der Vorrichtung (10) im Bereich des Anbringungsabschnitts (14) angeordnet ist.

11. Fahrzeug, insbesondere Kraftfahrzeug, vorzugsweise Hybrid- oder Elektrofahrzeug, mit einer Vorrichtung (10) gemäß einem der vorangehenden Ansprüche.

12. Verfahren zur Montage einer Vorrichtung (10) zur Halterung zumindest eines Energiemoduls (12) für ein Kraftfahrzeug, gemäß einem der Ansprüche 1 bis 10, wobei das Verfahren die folgenden Schritte aufweist:
- Befestigen von zumindest einem Energiemodul (12) an einem Halteelement (16) der Vorrichtung (10);
- zumindest teilweises Instandsetzen des zumindest einen Energiemoduls (12);
- Anordnen des Halteelements (16) zusammen mit dem zumindest einen zumindest teilweise instandgesetzten Energiemodul (12) in einem Gehäuse der Vorrichtung (10).

## Claims

1. A device (10) for mounting at least one power module (12) for a motor vehicle, especially for mounting at least one high-voltage power module for a hybrid or electric vehicle, wherein the device (10) has a holding element (16), which can be attached to the vehicle body via one or more attachment portions (14), for mounting the at least one power module (12), wherein the holding element (16) has at least one holding portion (18) for mounting the at least one power module (12) and at least one deformation portion (20) which is designed in such a way that the deformation portion (20), upon application of a predetermined force to the holding element (16), under deformation permits a specified relative movement, resulting from the deformation, between the holding portion (18) mounting the at least one power module (12) and the one or the plurality of attachment portion(s) (14) of the holding element (16),
**characterised in that**
the device (10) furthermore has a housing element (22) which is formed in such a way that the housing element (22) surrounds the at least one holding portion (18) of the holding element (16), preferably the holding portion (18) and the deformation portion (20) of the holding element (16), and is connected at least to the holding element (16) at the one or the plurality of attachment portion(s) (14).

2. A device (10) according to Claim 1, wherein the holding element (16) has at least two holding portions (18) for respectively mounting at least one power module (12) and at least one deformation portion (20) arranged therebetween which is formed in such a way that the deformation portion (20) upon application of a predetermined force to the holding element (16) permits a movement, resulting from the deformation, of the holding portion (18) in the direction of the deformation portion (20).

3. A device (10) according to Claim 2, wherein the holding element (16) is formed in such a way that the holding portions (18) thereof which are spaced apart over the deformation portion (20) lie on one axis in a longitudinal direction of the holding element (16) and/or the deformation portion (20) is shaped at least in portions in such a way that the deformation portion (20) at least in portions can surround a vehicle centre tunnel.

4. A device (10) according to one of the preceding claims, wherein the holding element (16) is formed in such a way that the at least one holding portion (18) mounts the at least one power module (12) in such a way that the holding portion (18) extends through the centre of gravity of the at least one power module (12).

5. A device (10) according to one of the preceding claims, wherein the holding element (16) is set up to be fastened to the vehicle body via the one or the plurality of attachment portion(s) (14) in the transverse or longitudinal direction of the vehicle, and/or is formed in such a way that the deformation portion (20) upon application of a predetermined force to the holding element (16) in the transverse or longitudinal direction of the vehicle permits a relative movement, resulting from the deformation, of the holding portion (18) mounting the at least one power module (12) in relation to the one or the plurality of attachment portion(s) (14) of the holding element (16) in the transverse or longitudinal direction of the vehicle.

6. A device (10) according to one of the preceding claims, wherein the deformation portion (20) is set up, upon application of a predetermined force to the holding element (16), under plastic and/or elastic deformation to act as an energy absorption element or upon application of a force to the holding element (16) under plastic and/or elastic deformation to bring about the movement of the holding portion (18) in the direction of an energy absorption element which is on the vehicle body.

7. A device (10) according to one of the preceding claims, wherein the deformation resistance of the holding portion (18) and the deformation resistance of the deformation portion (20) are selected in such a way that the deformation portion (20) upon application of a predetermined force within a specified range of forces deforms, while the holding portion (18) which is moved as a result of the deformation of the deformation portion (20) does not undergo any, or virtually no, plastic deformation.

8. A device (10) according to one of the preceding claims, wherein the at least one power module (12) has one or more power cells coupled together.

9. A device (10) according to one of the preceding claims, wherein the holding element (16) mounts the at least one power module (12) in such a way that upon application of a force to the device (10) a force portion of the applied force is transmitted by the holding element (16) and a further force portion of the applied force is transmitted by the power module (12).

10. A device (10) according to one of the preceding claims, wherein an energy absorption element is arranged on an outer housing side of the device (10) in the region of the attachment portion (14).

11. A vehicle, especially motor vehicle, preferably hybrid or electric vehicle, with a device (10) according to one of the preceding claims.

12. A method for assembling a device (10) for mounting at least one power module (12) for a motor vehicle, according to one of Claims 1 to 10, wherein the method comprises the following steps:
- fastening at least one power module (12) to a holding element (16) of the device (10);
- at least partially overhauling the at least one power module (12);
- arranging the holding element (16) together with the at least one at least partially overhauled power module (12) in a housing of the device (10).

## Revendications

1. Dispositif (10) de support d'au moins un module d'énergie (12) d'un véhicule, en particulier de support d'au moins un module d'énergie haute tension d'un véhicule hybride ou d'un véhicule électrique, ce dispositif (10) comportant un élément support (16) pouvant être monté côté carrosserie du véhicule par l'intermédiaire d'au moins un segment de montage (14) pour permettre de maintenir le module d'énergie (12), l'élément support (16) comprenant au moins un segment support (18) pour permettre de maintenir le module d'énergie (12) et au moins un segment de déformation (20) qui est réalisé de façon à permettre par déformation lors de l'application d'une force prédéfinie sur l'élément support (16), un déplacement relatif prédéfini résultant de la déformation entre le segment support (18) maintenant le module d'énergie (12) et le ou les segment(s) de montage (14) de l'élément support (16), **caractérisé en ce que**
le dispositif (10) comporte en outre un élément de boîtier (22) qui est réalisé de façon à entourer le segment support (18) de l'élément support (16), de préférence le segment support (18) et le segment de déformation (20) de l'élément support (16) et est relié au moins à l'élément support (16) par le segment de montage (14).

2. Dispositif (10) conforme à la revendication 1,
dans lequel l'élément support (16) comprend au moins deux segments support (18) permettant chacun de maintenir au moins un module d'énergie (12) et au moins un segment de déformation (20) situé entre ces segments qui est réalisé de façon à permettre lors de l'application d'une force prédéfinie sur l'élément support (16) un déplacement résultant de la déformation du segment support (18) en direction du segment de déformation (20).

3. Dispositif (10) conforme à la revendication 2,
dans lequel l'élément support (16) est réalisé de sorte que ses segments support (18) situés à distance de part et d'autre du segment de déformation (20) soient situés sur un essieu, dans la direction longitudinale de l'élément support (16), et/ou le segment de déformation (20) est formé au moins par segments de sorte qu'il puisse entourer, au moins par segments, le tunnel médian du véhicule.

4. Dispositif (10) conforme à l'une des revendications précédentes, dans lequel l'élément support (16) est réalisé de sorte que le segment support (18) maintienne le module d'énergie (12) pour que ce segment support (18) passe par le centre de gravité du module d'énergie (12).

5. Dispositif (10) conforme à l'une des revendications précédentes, **caractérisé en ce que**
l'élément support (16) est susceptible d'être fixé dans la direction transversale ou dans la direction longitudinale du véhicule, côté carrosserie par l'intermédiaire du ou des segment(s) de montage (14), et/ou est réalisé de sorte que, lors de l'application d'une force prédéfinie sur cet élément support (16) dans la direction transversale ou dans la direction longitudinale du véhicule, le segment de déformation (20) permette un déplacement relatif résultant de la déformation du segment support (18) maintenant le module d'énergie (12) par rapport au segment de montage (14) de l'élément support (16) dans la direction transversale ou dans la direction longitudinale du véhicule.

6. Dispositif (10) conforme à l'une des revendications précédentes, dans lequel le segment de déformation (20) est susceptible, lors de l'application d'une force prédéfinie sur l'élément support (16), d'agir en tant qu'élément d'absorption d'énergie par déformation plastique et/ou élastique, ou, lors de l'application d'une force sur l'élément support (16) de provoquer, par déformation plastique et/ou élastique, un déplacement du segment support (18) en direction d'un élément d'absorption de l'énergie située côté carrosserie du véhicule.

7. Dispositif (10) conforme à l'une des revendications précédentes, dans lequel la résistance à la déformation du segment support (18) et la résistance à la déformation du segment de déformation (20) sont choisies de sorte que, lors de l'application d'une force prédéfinie, le segment de déformation (20) se déforme dans une plage de forces prédéfinie, tandis que le segment support (18) déplacé suite à la déformation du segment de déformation (20) ne subisse pas ou essentiellement pas de déformation plastique.

8. Dispositif (10) conforme à l'une des revendications précédentes, dans lequel le module d'énergie (12) comprend une cellule d'énergie ou plusieurs cellules d'énergie couplées les unes aux autres.

9. Dispositif (10) conforme à l'une des revendications précédentes, dans lequel l'élément support (16) maintient le module d'énergie (12) de sorte que lors de l'application d'une force sur le dispositif (10) une proportion de la force appliquée soit transmise par l'élément support (16), tandis qu'une autre proportion de la force appliquée est transmise par le module d'énergie (12).

10. Dispositif (10) conforme à l'une des revendications précédentes, **caractérisé en ce que**
un élément d'absorption de l'énergie est monté sur la face externe du boîtier du dispositif (10) dans la zone du segment de montage (14).

11. Véhicule, en particulier véhicule automobile, de préférence véhicule hybride ou véhicule électrique équipé d'un dispositif (10) conforme à l'une des revendications précédentes.

12. Procédé de montage d'un dispositif (10) de support d'au moins un module d'énergie (12) d'un véhicule conforme à l'une des revendications 1 à 10, ce procédé comprenant les étapes suivantes consistant à :
- fixer au moins un module d'énergie (12) à un élément support (16) du dispositif (10),
- remettre au moins partiellement en état le module d'énergie (12),
- installer l'élément support (16) avec le module d'énergie (12) au moins partiellement remis en état dans le boîtier du dispositif (10).
